# EUROPEAN PATENT APPLICATION

(11) **EP 4 520 638 A1**
(43) Date of publication of application: **12.03.2025**
(21) Application number: 23874482.5
(22) Date of filing: 29.06.2023
(51) Int. Cl.: B62D 25/20

(54) **SHOCK ABSORBING STRUCTURE FOR VEHICLE**

(30) Priority: 07.10.2022 JP 2022162543
(71) Applicant: Toyoda Iron Works Co., Ltd., Toyota-shi, Aichi 471-8507 (JP)
(72) Inventor: TOCHIGI Yusuke, Toyota-shi, Aichi 471-8507 (JP)
(74) Representative: Zimmermann, Tankred Klaus
(86) International application number: PCT/JP2023/024157
(87) International publication number: WO 2024/075348

(57) **Abstract**

In a vehicle impact absorbing structure, an impact absorbing member (22) is disposed, as a configuration that absorbs energy during a collision on the side of a vehicle, in a side sill formed in a hollow shape in a vehicle front-and-rear direction. The impact absorbing member (22) is formed and disposed in a corrugated-plate shape in the vehicle front-and-rear direction. The corrugated-plate shape is formed in such a manner that a lineal length L1 of an edge portion (26) in a predetermined area in the vehicle front-and-rear direction and a lineal length L2 of a portion (28) other than the edge portion (26) are different, and is formed in such a manner that a direction of a ridge line (24) in the edge portion (26) of the corrugated-plate shape is a direction that is deviated from and is inclined with respect to a vehicle width direction.

## Description

### TECHNICAL FIELD

The present invention relates to a vehicle impact absorbing structure. Specifically, the present invention relates to a vehicle impact absorbing structure for effectively absorbing impact load during a collision on the side of a vehicle (a side collision).

### BACKGROUND ART

A vehicle, particularly an electric automobile, has a configuration where a battery is stored under a floor of the vehicle. In addition, such a vehicle is provided with an impact absorbing structure for protecting the battery from an impact during a collision of the vehicle. In particular, it is important for the impact absorbing structure to be an impact absorbing structure against a collision from the side of the vehicle, since the battery is placed under the floor of the central portion of the vehicle.

The impact absorbing structure against a collision from the side of the vehicle is usually placed in a side sill (also referred to as a "rocker") which is a vehicle skeletal member disposed between the floor under which the battery is placed and a side door of the automobile. The side sill is a hollow member extending in a front-and-rear direction of the vehicle, and an impact absorbing member is disposed inside the side sill to absorb energy during a side collision.

For example, an impact absorbing member disposed in a side sill, which is disclosed in JP-A-2021-146973, is formed and disposed in an elongated shape in a vehicle front-and-rear direction. Specifically, the elongated shape has a form in which a member that has a corrugated-plate shape as viewed in cross section in the vehicle front-and-rear direction is extended and disposed. This corrugated-plate shape reinforces the strength against the impact load acting from a vehicle width direction to strongly absorb the energy due to the deformation of the impact absorbing member.

Note that an evaluation test for energy absorption in an impact absorbing structure against a collision from the side of a vehicle is generally carried out by causing a side surface portion of a vehicle such as an automobile and a cylindrical pole set upright next to the side surface portion to collide with each other. This is usually referred to as a "side impact pole test." It is necessary to receive a predetermined rating in this side impact pole test.

### SUMMARY OF INVENTION

### PROBLEMS TO BE SOLVED BY INVENTION

When a side impact pole test is carried out on a corrugated-plate-shaped impact absorbing member such as described above, a ridge line of the corrugated-plate shape may tear and break from an edge portion. When a tear and a break take place in the corrugated-plate shape, the aim of the impact absorbing member that is formed in the corrugated-plate shape to strongly absorb energy may not be reliably achieved. Hence, it is desired to ensure that the impact absorbing member absorbs energy during a side collision.

### SOLUTION TO PROBLEMS

One aspect is a vehicle impact absorbing structure where an impact absorbing member that absorbs energy during a collision on the side of a vehicle is disposed in a side sill formed in a hollow shape in a vehicle front-and-rear direction, in which the impact absorbing member is disposed in a corrugated-plate shape in the vehicle front-and-rear direction, the corrugated-plate shape is formed in such a manner that a lineal length of an edge portion in a predetermined area in the vehicle front-and-rear direction and a lineal length of a portion other than the edge portion are different, and is formed in such a manner that a direction of a ridge line in the edge portion of the corrugated-plate shape is a direction that is deviated from and is inclined with respect to a vehicle width direction.

In some embodiments, the vehicle impact absorbing structure is configured in such a manner that the corrugated-plate shape of the impact absorbing member is formed such that the lineal length L1 of the edge portion and the lineal length L2 of the portion other than the edge portion satisfy a relationship of L1 < L2, and an end portion of the ridge line in the edge portion of the corrugated-plate shape is formed into a curved surface rolled inward.

In some embodiments, the vehicle impact absorbing structure is configured in such a manner that the corrugated-plate shape of the impact absorbing member is formed such that the lineal length L1 of the edge portion and the lineal length L2 of the portion other than the edge portion satisfy the relationship of L1 < L2, and an end portion of the ridge line in the edge portion of the corrugated-plate shape is formed into an inclined surface shape.

In some embodiments, the vehicle impact absorbing structure is configured in such a manner that the corrugated-plate shape of the impact absorbing member is formed such that the lineal length L1 of the edge portion and the lineal length L2 of the portion other than the edge portion satisfy the relationship of L1 < L2, and the shape of the edge portion between two ridge lines in the vehicle front-and-rear direction is formed into an inclined surface shape over an entire surface between the ridge lines.

In some embodiments, the vehicle impact absorbing structure is configured in such a manner that the corrugated-plate shape of the impact absorbing member is formed such that the lineal length L1 of the edge portion and the lineal length L2 of the portion other than the edge portion satisfy a relationship of L1 > L2, and the edge portion is formed, extending along an entire length thereof in an extension direction.

In some embodiments, the vehicle impact absorbing structure is configured in such a manner that a bead is formed in a vehicle up-and-down direction on a vertical wall, which is disposed in the vehicle up-and-down direction, of the corrugated-plate shape.

In some embodiments, it is possible to displace the direction of the ridge line in the edge portion of the corrugated-plate shape of the impact absorbing member from the vehicle width direction of a central portion position of the ridge line and to ensure that the impact absorbing member absorbs energy during a side collision.

### BRIEF DESCRIPTION OF DRAWINGS

Fig. 1 is a schematic cross-sectional view of a vehicle impact absorbing structure of one embodiment, and illustrates a state where a pole for a side impact pole test is placed next to a vehicle.
Fig. 2 is an exploded perspective view of a hollow side sill that includes two side sill members having a hat-shaped cross section and in which an impact absorbing member is disposed.
Fig. 3 is a perspective view illustrating a corrugated-plate-shaped impact absorbing member as one embodiment.
Fig. 4 is a side view of the impact absorbing member of Fig. 3 as viewed from the outside in a vehicle width direction.
Fig. 5 is a perspective view illustrating a deformed state of the impact absorbing member of Fig. 3 at the time of a side collision.
Figs. 6 is a perspective view illustrating a known corrugated-plate-shaped impact absorbing member in comparison with the impact absorbing member of Fig. 3.
Fig. 7 is a perspective view illustrating a deformed state of the known impact absorbing member illustrated in Fig. 6 at the time of a side collision.
Fig. 8 is a perspective view illustrating a corrugated-plate-shaped impact absorbing member of another embodiment.
Fig. 9 is a perspective view illustrating a corrugated-plate-shaped impact absorbing member of still another embodiment.
Fig. 10 is a perspective view illustrating a corrugated-plate-shaped impact absorbing member of yet another embodiment.

### DESCRIPTION OF EMBODIMENTS

Various embodiments are described hereinafter with reference to the drawings. In the following description, similar reference numerals are assigned to corresponding or similar features to avoid overlapping descriptions.

### [Impact Absorbing Structure]

One embodiment is a structure that absorbs an impact during a side collision to protect a battery of an electric automobile. Note that UPR in the indications of directions in the description of the drawings indicates upward, OUT indicates outward as viewed from the interior of an automobile, and FR indicates forward in the automobile. Therefore, the direction denoted by UPR is a vehicle up-and-down direction, the direction denoted by OUT is a vehicle width direction, and the direction denoted by FR is a vehicle front-and-rear direction.

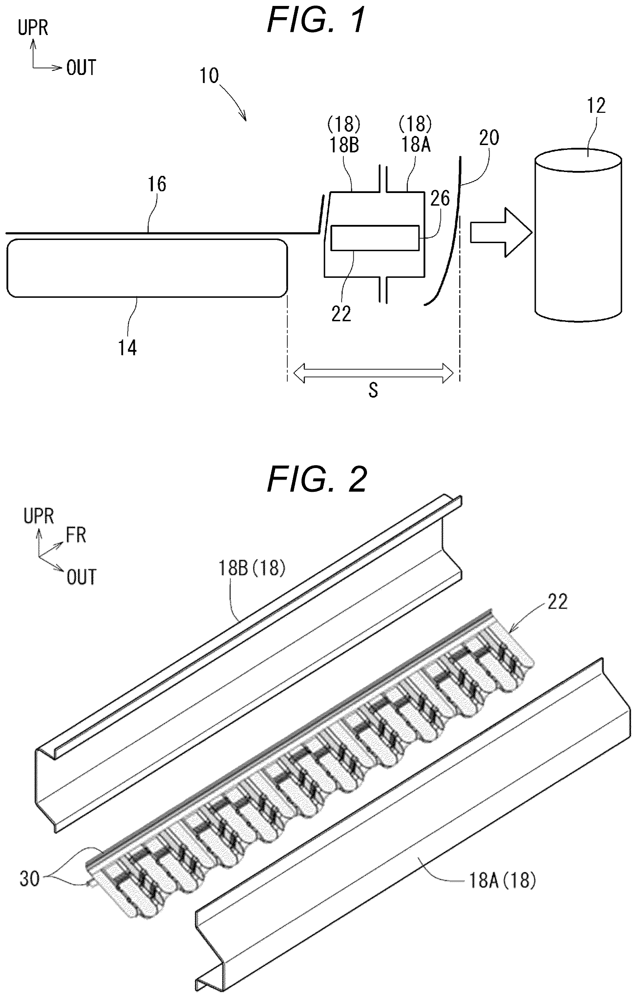

Fig. 1 schematically illustrates an impact absorbing structure 10 in cross section, in which a pole 12 for a side impact pole test is placed next to the body of the automobile. A battery 14, which is a power source of the electric automobile, is placed under a floor 16 of the electric automobile. As viewed in Fig. 1, a side sill 18 forming the skeleton of the body of the automobile is disposed on a right side portion of the floor 16, and furthermore, a side door 20 (usually a front door) is placed to the right of the side sill 18. Furthermore, the pole 12 is placed to the right of the side door 20 in the side impact pole test. It is configured in such a manner that when the side door 20 collides with the pole 12, the impact absorbing structure 10 absorbs the collision's energy within an area S between the side door 20 and the battery 14 to protect the battery 14. It is configured in such a manner that the energy is absorbed in the side sill 18 in particular.

### [Impact Absorbing Member]

In the above-mentioned embodiment, an impact absorbing member 22 is disposed in the side sill 18 to enable the impact absorbing member 22 to strongly absorb a side collision impact at the position of the side sill 18. As viewed in Fig. 1, the side sill 18 is formed by a combination of an outer side sill member 18A placed on the right side and an inner side sill member 18B placed on the left side, both members 18A and 18B having what is called a hat shape in cross section. As a result, the side sill 18 is formed in a hollow shape, and the hollow shape extends in the vehicle front-and-rear direction. Note that the material of the impact absorbing member 22 can be any steel material suitable for energy absorption based on deformation due to axial crush.

Fig. 2 illustrates the disposed form of the impact absorbing member 22 that is disposed in the side sill 18, with the disassembled outer and inner side sill members 18A and 18B. The impact absorbing member 22 is formed in a corrugated-plate shape as viewed in cross section in the vehicle front-and-rear direction, and is disposed in such a manner that a longitudinal direction thereof is oriented in the vehicle front-and-rear direction. The impact absorbing member 22 absorbs energy while being crushed in the vehicle width direction due to an impact from the vehicle width direction during a side collision. At this time in point, since the impact absorbing member 22 is formed in a corrugated-plate shape to encourage an improvement in strength, a large amount of energy can be absorbed. The corrugated-plate shape of the impact absorbing member 22 is formed by alternating vertical walls 32 extending in the vehicle up-and-down direction and flat walls 34 (upper surfaces 34U and bottom surfaces 34L) extending in the vehicle front-and-rear direction.

Note that the impact absorbing member 22 can be formed by connecting a plurality of members having a corrugated-plate portion along the longitudinal direction (the vehicle front-and-rear direction). However, the impact absorbing member 22 may be formed by one sheet if possible. As illustrated in Fig. 2, the impact absorbing member 22 is positioned at an inner end thereof and fixed to the inner side sill member 18B by mounting members 30 disposed on an upper surface and a lower surface of the impact absorbing member 22.

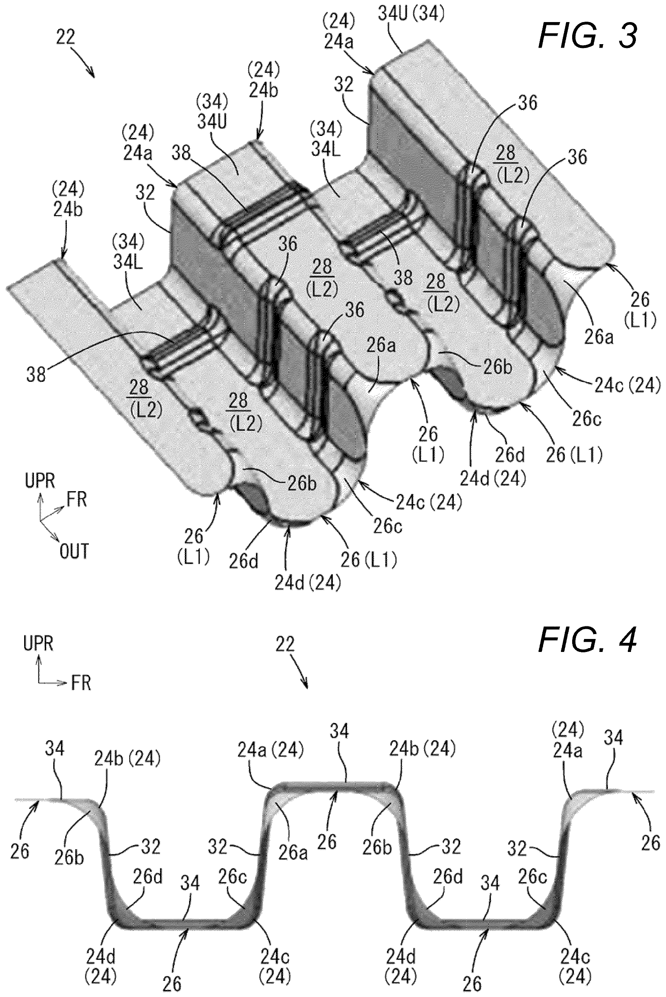

Since the impact absorbing member 22 is formed in a corrugated-plate shape in the vehicle front-and-rear direction as illustrated in Figs. 3 and 4, ridge lines 24 extending in the vehicle width direction are formed. Specifically, one cycle of the waves includes two ridge lines 24a and 24b on the upper surface of the corrugated-plate shape, and two ridge lines 24c and 24d on the lower surface of the corrugated-plate shape. Note that the ridge lines 24 of the embodiment are formed in such a manner that bent portions of the corrugated-plate shape have a rounded shape and therefore are formed with a predetermined rounding-off width.

### [Outer Edge Portion of Impact Absorbing Member]

In the above-mentioned embodiment, the corrugated-plate shape of the impact absorbing member 22 is formed in such a manner that a lineal length L1 of an edge portion 26 of the corrugated-plate shape in an area of a predetermined length in the vehicle front-and-rear direction, for example, in one cycle of the corrugated-plate shape, is different from a lineal length L2 of a cross section of a portion other than the edge portion 26, for example, at a central portion position 28. Note that the edge portion 26 of interest in the embodiment is the edge portion 26 on the vehicle outer side (the right end as viewed in Fig. 1) facing impact load during a side collision.

In the above-mentioned embodiment, it is possible to form the corrugated-plate shape in such a manner that the lineal length L1 of the edge portion 26 of the corrugated-plate shape in the vehicle front-and-rear direction, and the lineal length L2 of the portion other than the edge portion 26, for example, at the central portion position 28, in the vehicle front-and-rear direction satisfy a relationship of L1 < L2. This can be realized, for example, by forming curved surfaces 26a, 26b, 26c, and 26d in which the outer edge portion of the corrugated-plate shape is rolled inward in places of the ridge lines 24a, 24b, 24c, and 24d. In this case, the directions of the ridge lines 24 in the edge portion 26 are directions inclined with respect to the vehicle width direction.

### [Beads]

As illustrated in Fig. 3, beads 36 and 38 are formed on the vertical walls 32 and the flat walls 34 of the impact absorbing member 22 of the above-mentioned embodiment. The beads 36 are formed in the vehicle up-and-down direction on the vertical walls 32. Specifically, the beads 36 are provided on the vertical walls 32, each between the ridge line 24a and the ridge line 24c. In the embodiment of Fig. 3, two beads 36 are provided, and the two beads are provided at equal intervals from the outer edge portion 26 to the central portion position. In addition, the beads 36 are formed in a recessed shape.

The beads 38 formed on the flat walls 34 are formed on the upper surfaces 34U and bottom surfaces 34L of the corrugated-plate shape. The beads 38 formed on the upper surfaces 34U are formed all the way in the vehicle front-and-rear direction, each between the ridge line 24a and the ridge line 24b. The beads 38 formed on the bottom surfaces 34L are formed all the way in the vehicle front-and-rear direction, each between the ridge line 24c and the ridge line 24d. The bead 38 is provided at one place of each position near an inner end portion of the corrugated-plate shape. In addition, the beads 38 are formed in a protruding shape.

### [Effects of Above Embodiment]

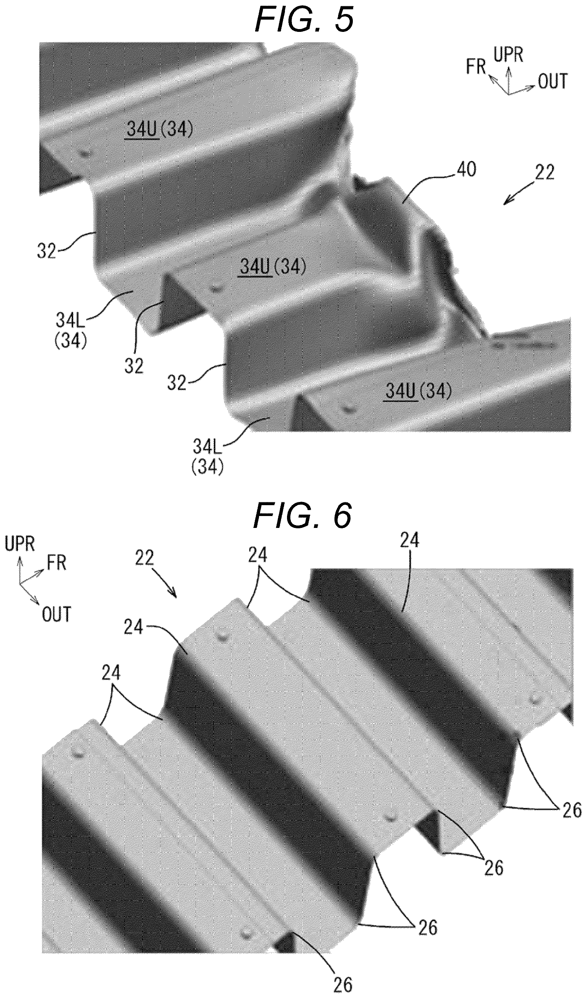

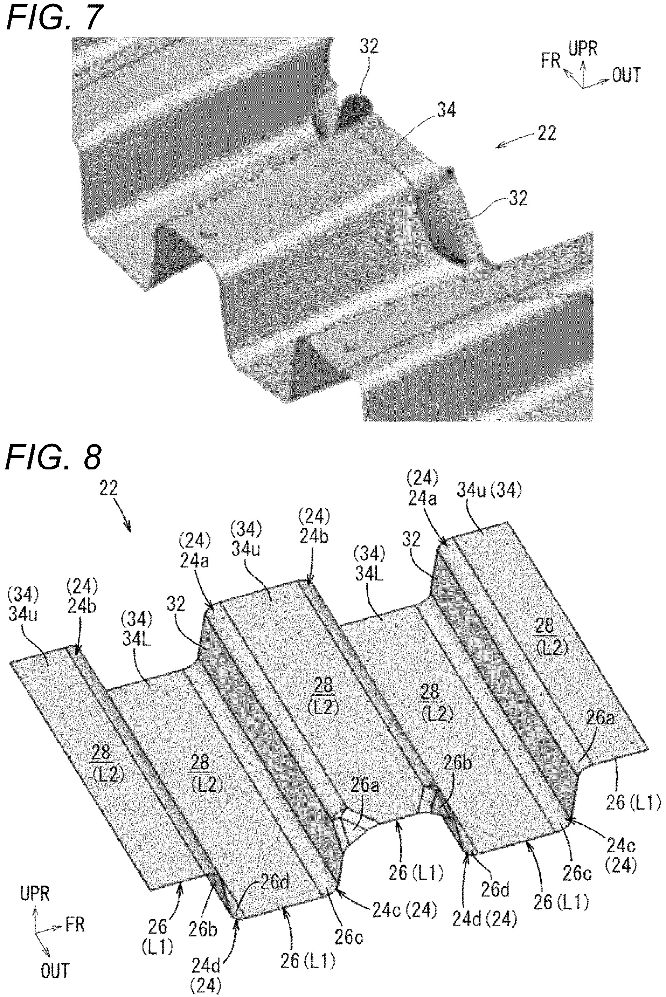

As illustrated in Fig. 6, in a known configuration, the ridge lines 24 of the corrugated-plate shape of the impact absorbing member 22 extend straight in the outer edge portion 26. Hence, impact load during a side collision is applied straight on to the edge portion 26, and the impact absorbing member 22 tears from the edge portion 26 along the ridge line 24. When a break takes place in the ridge line 24, the vertical wall 32 and the flat wall 34 of the corrugated-plate shape are independently deformed, as illustrated in Fig. 7, to absorb energy. If the vertical wall 32 and the flat wall 34 are deformed separately in this manner, the aim of enhancing energy absorption by forming the impact absorbing member 22 into a corrugated-plate shape is not sufficiently achieved.

In contrast, in the embodiment illustrated in Figs. 3 and 4, the edge portion 26 to which impact load is applied during a side collision is formed with the curved surfaces 26a, 26b, 26c, and 26d in which the shapes of end portions of the edge portions 26a to 26d are rolled inward in places of the ridge lines 24. As a result, the directions of the ridge lines 24 in the edge portions 26a to 26d are formed as directions inclined with respect to the vehicle width direction. Hence, the impact load during a side collision is not applied straight on to the edge portions 26a to 26d in contrast to the known case, but is applied obliquely. Consequently, a tear in the ridge line 24 in the edge portion 26 that would have conventionally taken place is prevented or suppressed, and the impact absorbing member 22 is deformed into a bellows shape 40 due to the impact load to absorb energy. The deformed state is the state illustrated in Fig. 5. Since the deformation into the bellows shape 40 in the embodiment illustrated in Figs. 3 and 4 occurs in a state where the vertical walls 32 and the flat walls 34 are integrated, the aim of enhancing energy absorption by forming the impact absorbing member 22 into a corrugated-plate shape is reliably achieved.

Note that, according to the above-mentioned embodiment, there is also an effect that the impact absorbing structure 10 can encourage a reduction in the weight of the component and a reduction in the component cost in comparison with a similar component that absorbs energy.

Note that in the above-mentioned embodiment, as illustrated in Fig. 3, the beads 36 are formed on the vertical walls 32 of the corrugated-plate shape of the impact absorbing member 22. The formation position of the beads 36 is set at the position where the bellows shape 40 illustrated in Fig. 5 is formed, which ensures that the formation of the bellows shape 40 of impact load during a side collision is induced. Note that only one crest of the bellows shape 40 is illustrated in Fig. 5, but two crests may be formed depending on the magnitude of the impact load. Hence, the number of the beads 36 formed, which are illustrated in Fig. 3, is two. Note that the illustrations of the beads of the vertical walls 32 are omitted in Fig. 5.

Moreover, in the above-mentioned embodiment, as illustrated in Fig. 3, the beads 38 are formed on the flat walls 34 of the corrugated-plate shape of the impact absorbing member 22. The beads 38 exert a reinforcing action of maintaining the positional relationship of the spacing between the ridge lines 24 disposed in the vehicle width direction in such a manner as to prevent deformation in the vehicle front-and-rear direction even when impact load is applied. Consequently, the positional relationship of the ridge lines 24 is also maintained, axial crush for energy absorption in the edge portion 26 is appropriately performed, and energy absorption is ensured. Note that the illustrations of the beads 38 of the flat walls 34 are omitted in Fig. 5.

### [Inclined Surface-shaped Ridge Line End Portion]

As illustrated in Fig. 8, as another embodiment, it is also possible to establish the relationship of L1 < L2 by forming the edge portions 26a and 26b of the corrugated-plate shape into an inclined surface shape in places of the ridge lines 24.
Consequently, the directions of the ridge lines 24 in the edge portion 26 are directions that are deviated from the vehicle width direction being the ridge line direction other than the edge portion 26 as in the case of the embodiment illustrated in Figs. 3 and 4.
If viewed in Fig. 8, the inclined surfaces of the edge portions 26a and 26b are formed downward. As a result, the directions are deviated from the direction in which impact load during a side collision acts, and it is possible to prevent or suppress a tear in the ridge line 24 from the edge portion 26 during the side collision. As a result, a break in the ridge line 24 is also prevented or suppressed, and it is ensured that the impact absorbing member 22 absorbs energy during the side collision. Note that in Fig. 8, the inclined surfaces of the edge portion 26 are illustrated only at two edge portions 26a and 26b, but are also similarly formed on the other part of the edge portion 26. Detailed illustrations thereof are omitted.

### [Inclined Surface Connecting Ridge Lines]

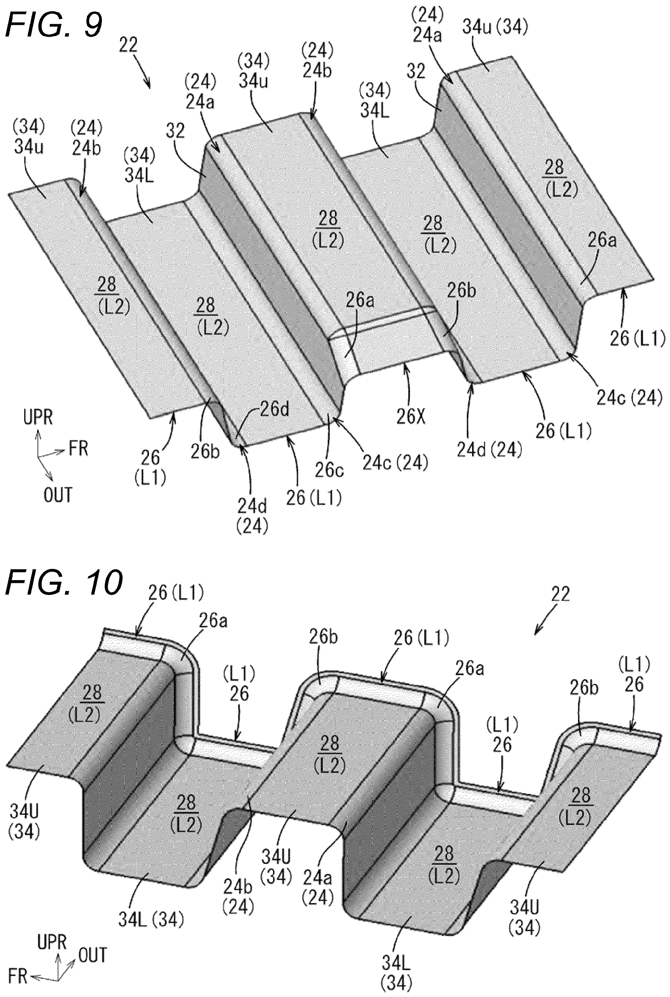

As illustrated in Fig. 9, as still another embodiment, the shape of an outer edge portion 26X between two ridge lines 24a and 24b in the vehicle front-and-rear direction is formed in an inclined surface shape over the entire surface between the ridge lines 24a and 24b, so that it is also possible to establish the relationship of L1 < L2. Consequently, the directions of the ridge lines 24a and 24b in the edge portion 26 are directions different from the vehicle width direction being the ridge line direction other than the edge portion as in the case of the one embodiment. When viewed in Fig. 9, the inclined plane is formed downward. As a result, the directions are deviated from the direction in which impact load during a side collision acts, and it is possible to prevent or suppress a tear in the ridge line 24 from the edge portion 26 during the side collision. As a result, a break in the ridge line 24 is also prevented or suppressed, and it is ensured that the impact absorbing member 22 absorbs energy during the side collision. Note that in Fig. 9, the inclined plane of the edge portion 26X is illustrated only in one place, but can be similarly formed on the other part of the edge portion 26.

### [Bent Edge Portion]

As illustrated in Fig. 10, as yet another embodiment, it is also possible to form the corrugated-plate shape of the impact absorbing member 22 in such a manner that the lineal length L1 of the edge portion 26 and the lineal length L2 at a portion other than the edge portion 26 satisfy a relationship of L1 > L2, in contrast to the above embodiments. In addition, the edge portion 26 bends along its entire length toward one side of the corrugated sheet (upward in Fig. 10). In this embodiment, the direction of the ridge lines 24 in the edge portion 26 is a direction different from the vehicle width direction being the ridge line direction other than the edge portion 26. When viewed in Fig. 10, the inclined plane is formed downward. Consequently, also in this embodiment, as in the case of the above-mentioned embodiments, the direction is deviated from the direction in which impact load during a side collision acts, and it is possible to prevent or suppress a tear in the ridge line 24 from the edge portion 26 during the side collision. As a result, a break in the ridge line 24 is also prevented or suppressed, and it is ensured that the impact absorbing member 22 absorbs energy during the side collision.

### [Other Embodiments]

The above-mentioned embodiments are about the case of the impact absorbing structure 10 for protecting a battery of an electric automobile during a side collision. However, the present invention is also applicable to an impact absorbing structure 10 for other than an electric automobile as another embodiment.

Moreover, in the above-mentioned first embodiment, the beads 36 and 38 are formed on the vertical walls 32 and the flat walls 34 of the corrugated-plate shape of the impact absorbing member 22. However, the beads 36 and 38 are not necessarily set. However, when these beads are set, then it allows ensuring that the bellows shape 40 is formed due to axial crush and that energy is absorbed.

Moreover, an embodiment in which the configurations of the edge portion 26 in the above-mentioned embodiments are combined can also be another embodiment.

### [Effects of Embodiments]

Furthermore, finally, the effects of the above-mentioned embodiments are additionally described.

In the above-mentioned embodiments, the corrugated-plate shape of the impact absorbing member disposed in the side sill is formed in such a manner that the lineal length of the edge portion in a predetermined area in the vehicle front-and-rear direction is different from the lineal length of a portion other than the edge portion. As a result, the direction of the ridge line in the edge portion of the corrugated-plate shape is a direction that is deviated from and is inclined with respect to the vehicle width direction. In other words, the direction of the ridge line in the edge portion of the corrugated-plate shape of the impact absorbing member is a direction that is shifted from the vehicle width direction at the central portion position of the ridge line. Consequently, the direction is deviated from the impact acting direction during a side collision, and during the side collision, it is possible to prevent or suppress a tear in the ridge line in the edge portion, and it is possible to prevent or suppress a break in the ridge line. As a result, the corrugated-plate shape ensures that the impact absorbing member absorbs energy during the side collision.

In some embodiments, in a first aspect of the invention, the corrugated-plate shape is formed in such a manner that the lineal length L1 of the edge portion and the lineal length L2 of the portion other than the edge portion satisfy the relationship of L1 < L2. In a second aspect of the invention, the end portion of the ridge line in the edge portion of the corrugated-plate shape is formed into a curved surface that is rolled inward. In a third aspect of the invention, the end portion of the ridge line in the edge portion of the corrugated-plate shape is formed into an inclined surface shape. In a fourth aspect of the invention, the edge portion between two ridge lines in the vehicle front-and-rear direction is formed into an inclined surface shape over the entire surface between the ridge lines. Consequently, the direction of the ridge line in the edge portion is a downward direction relative to the ridge line direction other than the edge portion. As a result, as in the first aspect of the invention, the direction is deviated from the impact acting direction during a side collision, and during the side collision, it is possible to prevent or suppress a tear in the ridge portion in the edge portion, and it is possible to prevent or suppress a break in the ridge line. As a result, the corrugated-plate shape ensures that the impact absorbing member absorbs energy during the side collision.

In some embodiments, the corrugated-plate shape is formed in such a manner that the lineal length L1 of the edge portion of the first aspect of the invention and the lineal length L2 of the portion other than the edge portion satisfy the relationship of L1 > L2. In a fifth aspect of the invention, the edge portion is extended along its entire length in the extension direction. As a result, the direction of the ridge line in the edge portion is an upward direction relative to the ridge line direction other than the edge portion. Consequently, as in the above-mentioned aspects of the invention, the direction is deviated from the impact acting direction during a side collision, and during the side collision, it is possible to prevent or suppress a tear in the ridge line in the edge portion, and it is possible to prevent or suppress a break in the ridge line. As a result, the corrugated-plate shape ensures that the impact absorbing member absorbs energy during the side collision.

In some embodiments, the beads are formed in the vehicle up-and-down direction on the vertical walls, which are disposed in the vehicle up-and-down direction, of the corrugated-plate shape of the impact absorbing member. According to the above-mentioned aspects of the invention, as a result of preventing or suppressing a tear and break in the ridge line from the edge portion during a side collision, the corrugated-plate shape is deformed like a bellows in the vehicle width direction, and energy is absorbed. The beads are provided to the vertical walls to ensure bellows-like deformation and to effectively absorb energy. Note that it is effective when the position where the bead shape is formed is at a position where the bellows has its crest.

Up to this point various embodiments have been described. However, the present technology is not limited to these embodiments, and those skilled in the art can make various additions, deletions, modifications, and improvements.

## Claims

1. A vehicle impact absorbing structure that absorbs energy during a collision on the side of a vehicle, the vehicle impact absorbing structure comprising:
a side sill formed in a hollow shape in a vehicle front-and-rear direction; and
an impact absorbing member disposed in the side sill, wherein
the impact absorbing member is formed in a corrugated-plate shape in the vehicle front-and-rear direction,
the corrugated-plate shape is formed in such a manner that a lineal length of an edge portion in a predetermined area in the vehicle front-and-rear direction and a lineal length of a portion other than the edge portion are different, and
a direction of a ridge line in the edge portion of the corrugated-plate shape is a direction that is deviated from and is inclined with respect to a vehicle width direction.

2. The vehicle impact absorbing structure according to claim 1, wherein
the corrugated-plate shape of the impact absorbing member is formed in such a manner that the lineal length L1 of the edge portion and the lineal length L2 of the portion other than the edge portion satisfy a relationship of L1 < L2, and
an end portion of the ridge line in the edge portion of the corrugated-plate shape is formed into a curved surface rolled inward.

3. The vehicle impact absorbing structure according to claim 1, wherein
the corrugated-plate shape of the impact absorbing member is formed in such a manner that the lineal length L1 of the edge portion and the lineal length L2 of the portion other than the edge portion satisfy a relationship of L1 < L2, and
an end portion of the ridge line in the edge portion of the corrugated-plate shape is formed into an inclined surface shape.

4. The vehicle impact absorbing structure according to claim 1, wherein
the corrugated-plate shape of the impact absorbing member is formed in such a manner that the lineal length L1 of the edge portion and the lineal length L2 of the portion other than the edge portion satisfy a relationship of L1 < L2, and
the shape of the edge portion between two ridge lines in the vehicle front-and-rear direction is formed into an inclined surface shape over an entire surface between the ridge lines.

5. The vehicle impact absorbing structure according to claim 1, wherein
the corrugated-plate shape of the impact absorbing member is formed in such a manner that the lineal length L1 of the edge portion and the lineal length L2 of the portion other than the edge portion satisfy a relationship of L1 > L2, and
the edge portion is extended along an entire length thereof in an extension direction.

6. The vehicle impact absorbing structure according to any one of claims 1 to 5, wherein a bead is formed in a vehicle up-and-down direction on a vertical wall, which is disposed in the vehicle up-and-down direction, of the corrugated-plate shape.
